Europäisches Patentamt

European Patent Office

Office européen des brevets

(11) Publication number: **0 441 481 A1**

# EUROPEAN PATENT APPLICATION

(21) Application number: 91300222.6

(22) Date of filing: 11.01.91

(51) Int. Cl.⁵: **C04B 41/00**, B08B 3/08

(30) Priority: **06.02.90 US 475447**

(43) Date of publication of application:
**14.08.91 Bulletin 91/33**

(84) Designated Contracting States:
**AT BE CH DE DK ES FR GB GR IT LI LU NL SE**

(71) Applicant: **Kerze, Joseph E.**
**17446 Hatteras Street**
**Encino, California 91316(US)**

(72) Inventor: **Kerze, Joseph E.**
**17446 Hatteras Street**
**Encino, California 91316(US)**

(74) Representative: **Wain, Christopher Paul et al**
**A.A. THORNTON & CO. Northumberland**
**House 303-306 High Holborn**
**London WC1V 7LE(GB)**

(54) Stain cleaning method.

(57) Hard surfaces such as marble, brick, concrete, tiles etc., with oily stains thereon can be treated to reduce or remove the stains by providing a solvent container around the stain, maintaining solvent in the container in contact with the stain for from 1 to 24 hours, removing solvent and applying an absorbant to the surface, and finally removing the absorbant and drying the surface.

EP 0 441 481 A1

# STAIN CLEANING METHOD

This invention relates to a method of treating hydrocarbon stains on a hard surface to reduce or remove the stains.

There are many construction materials such as marble, brick, concrete, etc. which are used in buildings, eg. for kitchen units, bathroom furniture, floors, etc, which can become stained when contacted by materials which contain natural or synthetic oils of various kinds. Examples of these oily materials that often cause stains include plumber's putty, which may stain the surface of marble or tile around kitchen or bathroom fixtures, bacon grease, cooking oil, silicones, lubricants, and certain cosmetic products. The hydrocarbon stains caused by these materials can be very difficult to remove from tile, marble, concrete, etc. Sometimes, only abrasive cleaning is successful but this often ruins the surface of the material.

We have now found a way of treating such stains whereby they can be reduced or removed.

According to the present invention, there is provided a method of treating a hard surface to remove or reduce a hydrocarbon stain thereon, which comprises surrounding the stain on the surface with means to contain a liquid solvent in contact with the stain; placing in the containing means an organic solvent which is miscible with petroleum hydrocarbons which are liquid at ambient temperature and pressure; maintaining the solvent in contact with the stain for a period of from 1 to 24 hours; removing solvent and placing on the surface an absorbant material which does not dissolve in the solvent; maintaining the absorbant material in contact with the surface for from 1 to 24 hours, and then removing the absorbant material and allowing the treated surface to air dry.

In the method of the invention, there is first applied to the surface to be cleaned, a solvent material. Various methods can be used to apply the solvent material to the surface. The most convenient is usually to place over the stain a container open at the bottom, such as a plastic cylinder, which is slightly larger than the stain. Solvent is then poured into the container directly, or an absorbant material such as a sponge can be placed inside the container (eg. a ring) and the solvent poured into the container in an amount to saturate the absorbant material. A cover is then placed over the container in order to prevent (or reduce) evaporation of the solvent.

The solvent is allowed to remain in contact with the stain on the surface for any suitable time, eg. for a period of from 1 to 24 hours, depending on the depth and nature of the stain. At the end of this time, the cover of the container is removed and the absorbant material (if any) is removed. Then an absorbant powder is placed in the container in a sufficient depth to cover any remaining solvent in the container. The lid to the container does not necessarily have to be replaced after the absorbant powder has been added, but it is preferred to do so to contain any solvent fumes.

The absorbant powder is allowed to remain in the container on the stain for any suitable period, eg. for anywhere from 1 to 24 hours and then the powder is removed. The area of the stain is then allowed to air dry, eg. for 24 hours, after which, if the stain is not completely removed, the process can be repeated.

This method has been effective to remove stains of bacon grease, cooking oil, silicones, lubricants and make-up from tile and marble surfaces. Any substance of an oily nature can be treated in this way for removal, including motor oil stains from concrete. Motor oil stains are of course common on the floors of garages. The method of the invention is also effective for treating smog residue on stone.

The solvent can be any organic chemical, or mixture of chemicals, which is completely miscible in all proportions with the stain-forming petroleum hydrocarbons normally containing 10 to 20 carbon atoms per molecule and being liquid at ambient temperature and pressure. This would include all aromatic hydrocarbons or mixtures thereof having a molecular weight of 78 to 130. Also included are hydrocarbons, both aromatic, aliphatic, or alicyclic, and mixtures thereof, which preferably boil at atmospheric pressure between 40°C and 140°C, and this would include certain halogenated hydrocarbons, both aromatic and aliphatic. The solvent molecule may also contain oxygen, e.g. it may be an alcohol or an ether, preferably having a boiling point between 40°C and 140°C. Examples of suitable solvents are benzene, toluene, tetrachlorethane, xylene, dioxane and butyl acetate. Acids and amines should not in general be used since they may damage the surface being treated.

The absorbant material added in the second stage of the method is preferably a finely divided organic or inorganic solid which does not dissolve in the organic solvent. Whilst organic powders can be utilized, such as starch or powdered sugar, we prefer to use an inorganic solid such as anhydrous calcium sulfate, aluminum oxide or silicon dioxide. Preferably, the inorganic solid should have a mean surface area less than 100 $\mu$m (microns). The surface area is preferably from about 0.5 $m^2/g$ to about 50 $m^2/g$.

Often, in treating stains of the type described, the stain surrounds a hole, such as where a bathroom fixture had previously been installed and the stains are caused by plumber's putty. In effecting the treatment hereunder, it may be necessary to seal the hole in some manner such as by placing over the hole a sheet of aluminum foil and sealing it with a product such as silicon. Alternatively an appropriately shaped container for the solvent can be used.

In order that the invention may be more fully understood, the following Example is given by way of illustration only.

Example

A marble bathroom top which contained a sink was cleaned as follows. The fixtures for the hot and cold taps and the water delivery system were removed, and this revealed stains around each of the holes for the fixtures caused by plumber's putty used when the fixtures were originally installed. The holes were sealed with aluminum foil and silicon which was allowed to cure for 24 hours in order to obtain a fixed seal. A ring of pliable plastic tubing was placed around the stain at a diameter slightly bigger than that of the stain. An absorbant pad consisting of 8 layers of paper towels was cut to the size of the stain but smaller than the plastic ring. The absorbant pad was placed on the marble surface inside the ring. Toluene was poured on to the absorbant pad to a 100% saturation level. A piece of aluminum foil, larger than the plastic ring, was placed over the absorbant material. A flat weight was placed on top of the plastic ring sealing the foil and the absorbant pad to the marble surface. This was allowed to stand for 24 hours.

After 24 hours, the weight was removed, then the plastic ring, then the foil and finally the absorbant material. At this point, the ring was returned and a powdery absorbant material comprising calcium sulfate hemihydrate, also known as plaster of paris, was placed over the entire stain to a depth of approximately 1 inch (25mm). The powder was then covered with another piece of aluminum foil and a cover in order to contain any fumes left from the solvent material. The powder was allowed to stand for 24 hours and then the cover, the powder and the ring were removed and the marble was allowed to air dry for 24 hours.

In this particular instance, there was a slight trace of the stain remaining so the treatment was exactly repeated a second time, as a result of which all the stain was removed from the marble top.

Claims

1. A method of treating a hard surface to remove or reduce a hydrocarbon stain thereon, which comprises surrounding the stain on the surface with means to contain a liquid solvent in contact with the stain; placing in the containing means an organic solvent which is miscible with petroleum hydrocarbons which are liquid at ambient temperature and pressure; maintaining the solvent in contact with the stain for a period of from 1 to 24 hours; removing solvent and placing on the surface an absorbant material which does not dissolve in the solvent; maintaining the absorbant material in contact with the surface for from 1 to 24 hours; and then removing the absorbant material and allowing the treated surface to air dry.

2. A method according to claim 1, wherein the solvent is an organic compound, or a mixture of organic compounds, which boils at atmospheric pressure between 40°C and 140°C.

3. A method according to claim 1 or 2, wherein the solvent is benzene, toluene, tetrachlorethane, xylene, dioxane or butyl acetate.

4. A method according to claim 1,2 or 3, wherein the absorbant material is a finely divided, inorganic, water-insoluble material.

5. A method according to claim 4, wherein the absorbant material has a mean particle size less than 100 $\mu$m (microns).

6. A method according to claim 4 or 5, wherein the surface area of the absorbant material is from 0.5 to 50 m$^2$/g.

7. A method according to claim 4,5 or 6, wherein the absorbant material is calcium sulfate, aluminum oxide or silicon dioxide.

8. A method according to any of claims 1 to 7, wherein the means to contain the solvent comprises a cylinder open at the top and the bottom.

9. A method according to any preceding claim, wherein the solvent is maintained in contact with the stain whilst absorbed on a material saturated therewith in said container.

10. A method according to claim 9, in which the material is a sponge.

| Category | Citation of document with indication, where appropriate, of relevant passages | Relevant to claim | CLASSIFICATION OF THE APPLICATION (Int. Cl.5) |
|---|---|---|---|
| A | EP - A1 - 0 273 594<br>(AIRWICK INDUSTRIES, INC.)<br>    * Totality * | 1 | C 04 B 41/00<br>B 08 B  3/08 |
| A | US - A - 3 149 364<br>(BAPTIST et al.)<br>    * Totality * | 1 | |
| A | DR. OTTO-ALBRECHT NEUMÜLLER<br>"RÖMPPS CHEMIE-LEXIKON",<br>7th edition, 2 : "D-G", 1976,<br>Franckh'sche Verlagshandlung,<br>Stuttgart<br>pages 1145-1149<br>    * Pages 1145-1149, "Fleckent-<br>      fernung", "Fleckentfernungs-<br>      mittel" * | 1-10 | |

**DOCUMENTS CONSIDERED TO BE RELEVANT**

TECHNICAL FIELDS
SEARCHED (Int. Cl.5)

C 04 B
C 11 D
B 08 B

The present search report has been drawn up for all claims

| Place of search | Date of completion of the search | Examiner |
|---|---|---|
| VIENNA | 10-04-1991 | BECK |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)